# EUROPÄISCHE PATENTSCHRIFT

(11) **EP 3 946 923 B1**
(45) Veröffentlichungstag und Bekanntmachung des Hinweises auf die Patenterteilung: **10.05.2023**
(21) Anmeldenummer: 20717791.6
(22) Anmeldetag: 27.03.2020
(51) Int. Cl.: B32B 15/02, B32B 1/08, B32B 3/08, B32B 5/18, B32B 15/04, B32B 15/20, B32B 27/06, B32B 27/08, B32B 27/18, B32B 27/30, B32B 27/32, B32B 27/34, B32B 27/40, F16L 9/00, F16L 59/00, F16L 59/16, F16L 11/08, F16L 57/04

(54) **VERFAHREN ZUM HERSTELLEN EINER FLUIDLEITUNG SOWIE ENTSPRECHENDE FLUIDLEITUNG**
METHOD FOR PRODUCING A FLUID LINE, AND CORRESPONDING FLUID LINE
PROCÉDÉ DE FABRICATION D'UNE CONDUITE DE FLUIDE ET CONDUITE DE FLUIDE CORRESPONDANTE

(30) Priorität: 03.04.2019 DE 102019204776
(43) Veröffentlichungstag der Anmeldung: 09.02.2022
(73) Patentinhaber: aft automotive GmbH, 48268 Greven-Reckenfeld (DE)
(72) Erfinder: WEHRMANN, Christoph, 48629 Metelen (DE)
(74) Vertreter: Dietz, Christopher Friedrich
(86) Internationale Anmeldenummer: PCT/EP2020/058808
(87) Internationale Veröffentlichungsnummer: WO 2020/201135

(56) Entgegenhaltungen:
- WO-A1-2015/197730
- DE-A1- 3 103 587
- DE-A1-102008 060 234
- DE-A1-102016 109 168

## Beschreibung

Die Erfindung betrifft ein Verfahren zum Herstellen einer Fluidleitung für ein Fluid, die einen Grundkörper mit wenigstens einer aus Kunststoff bestehenden Schicht aufweist. Die Erfindung betrifft weiterhin eine Fluidleitung für ein Fluid.

Aus dem Stand der Technik ist beispielsweise die Druckschrift WO 2015/197730 A1 bekannt. Diese beschreibt eine Kraftstoffleitung mit einem aus Kunststoff gefertigten Innenrohr, dass wenigstens eine äußere Schutzummantelung aufweist. Es ist vorgesehen, dass die Schutzummantelung eine wärmeleitende Schicht auf der Mantelaußenseite des Innenrohrs aufweist, wobei die Schicht eine höhere Wärmeleitfähigkeit als das Innenrohr aufweist. Weitere Fluidleitungen gehen aus den Druckschriften US 2005/0037214 A1, EP 1 258 340 A2 sowie FR 2 731 767 A1 hervor.

Die Druckschrift DE3103587 beschreibt einen biegsamen Schlauch, der sich aus mehreren Lagen zusammensetzt. So folgen in radialer Richtung von innen nach außen eine innere Rohrleitung 10, eine wärmeisolierende Zwischenschicht 11 und eine äußere Schutzhülle 12 aufeinander. Die innere Rohrleitung 10 besteht aus einer Innenschicht 14, einer Zwischenschicht 15 und einer Außenschicht 16. Die Innenschicht 14 und die Außenschicht 16 weisen jeweils einen schraubenförmig aufgewickelten Draht auf, wobei die Drähte die Zwischenschicht aus biegsamen Verbundwerkstoff zwischen sich aufnehmen. Die Zwischenschicht 15 verfügt über Bänder 15a und 15b, die mit entgegengesetzten Wicklungsrichtungen gewickelt sind, sodass sie sich kreuzweise überdecken. Jede der Zwischenschichten besteht aus dem Verbundwerkstoff, der sich durch drei sich überdeckende Schichten auszeichnet. Hierbei ist zwischen gleichartigen Schichten 18' und 18" eine undurchlässige Zwischenschicht 18 angeordnet. Die undurchlässige Zwischenschicht 18 besteht beispielsweise aus Metall, nämlich bevorzugt aus einem sehr dünnen Blech beziehungsweise Stahlband. Die Schichten 18' und 18" bestehen hingegen aus einem Fasergewebe, welches beispielsweise eine leinen- oder taftähnliche Schnürung aufweist.

Es ist Aufgabe der Erfindung, ein Verfahren zum Herstellen einer Fluidleitung vorzuschlagen, welches gegenüber bekannten Verfahren Vorteile aufweist, insbesondere eine Erhöhung der Flammbeständigkeit der Fluidleitung gegenüber herkömmlichen Fluidleitungen bewirkt.

Dies wird erfindungsgemäß mit einem Verfahren zum Herstellen einer Fluidleitung mit den Merkmalen des Anspruchs 1 erreicht. Dabei ist vorgesehen, dass auf den Grundkörper wenigstens eine als Wärmeschutzschicht ausgebildete Mantelschicht aufgebracht wird, die über wenigstens eine Wärmeisolationsschicht sowie zumindest eine metallische Wärmeleitschicht verfügt, wobei die Wärmeleitschicht eine den Grundkörper umwickelnde Kunststofffolienbahn und eine auf die Kunststofffolienbahn vor dem Umwickeln des Grundkörpers aufgebrachte Metallschicht aufweist oder wobei die Wärmeleitschicht wenigstens einen den Grundkörper umwickelnden Metalldraht aufweist, der vor dem Umwickeln des Grundkörpers mit einer Beschichtung versehen wird.

Die Fluidleitung dient dem Transportieren des Fluids, insbesondere eines flüssigen oder gasförmigen Fluids. Die Fluidleitung wird beispielsweise im Kraftfahrzeugbereich eingesetzt und kann entsprechend einen Bestandteil eines Kraftfahrzeugs darstellen. Vorzugsweise dient die Fluidleitung als Kraftstoffleitung und somit dem Zuführen eines Kraftstoffs, vorzugsweise zu einem Antriebsaggregat des Kraftfahrzeugs. Die Fluidleitung ist jedoch grundsätzlich universell anwendbar. Beispielsweise kann sie auch in Form einer Unterdruckleitung, insbesondere einer Bremsunterdruckleitung, einer Blow By-Leitung, einer Hydraulikleitung, einer Kühlwasserleitung, einer Kurbelgehäuseentlüftungsleitung oder einer Aktivkohlefilterregenerationsleitung vorliegen.

Die Fluidleitung weist den Grundkörper auf, der wiederum über die wenigstens eine Schicht verfügt. Der Grundkörper kann also einschichtig ausgestaltet sein und folglich lediglich eine einzige Schicht aufweisen. Alternativ ist der Grundkörper mehrschichtig und verfügt entsprechend über mehrere Schichten, welche in radialer Richtung bezügliche einer Längsmittelachse der Fluidleitung aufeinander folgen. Die Schicht beziehungsweise zumindest eine der Schichten besteht aus Kunststoff. Im Falle einer einzigen Schicht ist diese also aus Kunststoff. Liegen mehrere Schichten vor, so besteht wenigstens eine der Schichten aus Kunststoff, vorzugsweise jedoch mehrere oder sogar alle der Schichten. Der Kunststoff kann grundsätzlich beliebig gewählt werden. Der Kunststoff kann als faserverstärkter Kunststoff vorliegen, also eine Kunststoffmatrix sowie in diese eingebettete Verstärkungsfasern aufweisen.

Insgesamt werden die Anforderungen an eine solche Fluidleitung immer höher, insbesondere falls sie in den Motorraum des Kraftfahrzeugs angeordnet ist. Dies gilt insbesondere hinsichtlich der Flammbeständigkeit, also der Beständigkeit gegenüber einer offenen Flamme. Die Flammbeständigkeit für eine als Kraftstoffleitung verwendete Fluidleitung ist beispielsweise in der DIN 73379:2014-07 festgehalten. Gemäß dieser Norm darf eine mit Wasser gefüllte und unter einem definiertem Innendruck stehende Fluidleitung bei Beaufschlagung mit einer offenen, lokal wirkenden Flamme mit 800 °C erst nach einer Mindestversagenszeit undicht werden. Eine alternative Prüfvorschrift stellt die PV 3343 dar. Diese sieht für die Flammbeständigkeit eine Prüfung bei einer luftgefüllten Fluidleitung bei einem Innendruck von 4 bar vor, welche ebenfalls mit einer offenen, lokal wirkenden Flamme mit 800 °C beaufschlag wird. Gemäß dieser Prüfvorschrift ist in der Fluidleitung kein Wasser als wärmeleitendes Medium vorhanden, wodurch die so gemessene Versagenszeit üblicherweise deutlich unter derjenigen liegt, welche gemäß der DIN-Norm ermittelt werden.

Um die Flammbeständigkeit der Fluidleitung zu erhöhen, wird auf den Grundkörper die wenigstens eine Mantelschicht aufgebracht, die als Wärmeschutzschicht dient. Unter der Mantelschicht ist vorzugsweise eine Schicht zu verstehen, die den Grundkörper im Querschnitt gesehen in Umfangsrichtung vollständig umgreift. In anderen Worten separiert die Mantelschicht den Grundkörper im Querschnitt gesehen vollständig von einer Außenumgebung der Fluidleitung und/oder von einer weiteren Schicht, die auf der dem Grundkörper abgewandten Seite der Mantelschicht angeordnet ist.

Die Mantelschicht liegt als Wärmeschutzschicht vor und dient insoweit dem Schutz des Grundkörpers vor Wärme. Die Wärmeschutzschicht verfügt hierzu über die wenigstens eine Wärmeisolationsschicht sowie über die wenigstens eine Wärmeleitschicht. Die Wärmeisolationsschicht weist eine geringere Wärmeleitfähigkeit auf als die Wärmeleitschicht. Besonders bevorzugt weist die Wärmeisolationsschicht zudem eine niedrigere Wärmeleitfähigkeit auf als der Grundkörper oder zumindest eine der Schichten des Grundkörpers. Die Wärmeisolationsschicht dient einer thermischen Isolation des Grundkörpers gegenüber der Außenumgebung. Mithilfe der Wärmeisolationsschicht wird insoweit ein Wärmeeintrag aus der Außenumgebung, insbesondere von der offenen Flamme, auf den Grundkörper zumindest zeitweise verhindert oder wenigstens verringert. Die Wärmeisolationsschicht besteht beispielsweise aus einem geschäumten Material, insbesondere einem geschäumten Kunststoff, der auch als Schaumstoff bezeichnet werden kann.

Zusätzlich zu der Wärmeisolationsschicht verfügt die Wärmeschutzschicht über die Wärmleitschicht. Diese ist derart ausgestaltet, dass sie Wärme ableitet beziehungsweise verteilt. Bei einer lokalen Beaufschlagung der Fluidleitung an einer Beaufschlagungsstelle mit Wärme, insbesondere bei einer hohen Temperatur, wird insoweit die Wärme mittels der Wärmeleitschicht von der Beaufschlagungsstelle abgeführt, vorzugsweise zumindest in Umfangsrichtung, besonders bevorzugt jedoch zusätzlich in Längsrichtung der Fluidleitung, also in axialer Richtung bezüglich einer Längsmittelachse der Fluidleitung. Besonders bevorzugt erstreckt sich hierzu zumindest die Wärmeleitschicht, weiter bevorzugt jedoch zusätzlich auch die Wärmeisolationsschicht, in Umfangsrichtung vollständig um den Grundkörper herum und/oder in axialer Richtung entlang des gesamten Grundkörpers.

Die Wärmeleitschicht ist metallisch, besteht also zumindest teilweise aus Metall, insbesondere einem gut wärmeleitenden Metall. Das Metall ist zum Beispiel Aluminium und/oder Kupfer oder weist dieses zumindest auf. Die Wärmeleitschicht ist zudem bevorzugt mediendurchlässig. Es ist also nicht vorgesehen, mithilfe der Wärmeleitschicht die Permeationsfestigkeit der Fluidleitung zu verbessern. Vielmehr lässt die Wärmeleitschicht eine solche Permeation, insbesondere des Fluids, durch sie hindurch zu. Die Wärmeleitschicht realisiert also keine fluiddichte Schicht, sondern ist vielmehr zumindest bereichsweise für das Fluid durchgängig. Hingegen ist der Grundkörper bevorzugt mediendicht beziehungsweise fluiddicht, insbesondere vollständig, sodass die Wärmeschutzschicht von dem Grundkörper gegenüber dem Fluid abgedichtet ist. Die Wärmeschutzschicht gerät insoweit bevorzugt nicht in Fluidkontakt mit dem Fluid.

Die Wärmeleitschicht weist in einer ersten Ausführungsvariante als wesentliche Bestandteile die Kunststofffolienbahn und die Metallschicht auf. Die Metallschicht ist auf die Kunststofffolienbahn aufgebracht, nämlich vor der Anordnung der Wärmeleitschicht an dem Grundkörper. Das bedeutet, dass die Kunststofffolienbahn und die Metallschicht gemeinsam an dem Grundkörper angebracht werden, nämlich durch Umwickeln des Grundkörpers. In anderen Worten wird die Wärmeleitschicht insbesondere schraubenförmig beziehungsweise helixförmig an dem Grundkörper derart angeordnet, dass sie diesen im Querschnitt gesehen zumindest bereichsweise, vorzugsweise vollständig, umgreift. Beispielsweise ist es vorgesehen, dass die Wärmeleitschicht den Grundkörper an wenigstens einer Axialposition im Querschnitt gesehen den Grundkörper in Umfangsrichtung vollständig umgreift. Besonders bevorzugt ist dies über die gesamte Längserstreckung des Grundkörpers, also über dessen Erstreckung in axialer Richtung, der Fall.

Im Falle des schraubenförmigen oder helixförmigen Umgreifens wird der Grundkörper bevorzugt in Umfangsrichtung mehrfach mit der Wärmeleitschicht umwickelt. Es kann jedoch auch vorgesehen sein, dass die Wärmeleitschicht in Längsrichtung an dem Grundkörper angeordnet wird, wobei die Wärmeleitschicht eine Breite aufweist, die mindestens einem Außenumfang des Grundkörpers entspricht. Anschließend werden Seitenbereiche der Wärmeleitschicht ausgehend von einer ersten Seite des Grundkörpers auf gegenüberliegenden Seiten des Grundkörpers aufeinander zu verlagert, bis sie sich auf einer der ersten Seite gegenüberliegenden zweiten Seite des Grundkörpers treffen. Beispielsweise werden die Seitenbereiche auf dieser zweiten Seite miteinander fluchtend oder überlappend angeordnet.

Die hohe Wärmeleitfähigkeit der Wärmeleitschicht wird mittels der Metallschicht realisiert. Insoweit weist die Metallschicht eine höhere Wärmeleitfähigkeit auf als die Kunststofffolienbahn. Eine Schichtdicke der Kunststofffolienbahn kann geringer sein als eine Schichtdicke der Metallschicht, wobei unter der Schichtdicke vorzugsweise eine Erstreckung der Kunststofffolienbahn beziehungsweise der Metallschicht in radialer Richtung bezüglich der Längsmittelachse der Fluidleitung zu verstehen ist. Die Wärmeleitschicht weist beispielsweise eine Gesamtstärke auf, welche sich aus der Schichtstärke der Kunststofffolienbahn und der Schichtstärke der Metallschicht zusammensetzt, insbesondere ausschließlich. Die Schichtstärke der Metallschicht ist vorzugsweise um einen Faktor von mindestens 1,5, mindestens 2,0, mindestens 2,5, mindestens 3,0, mindestens 4,0 oder mindestens 5,0 größer als die Schichtstärke der Kunststofffolienbahn. Hierdurch wird eine besonders gute Wärmeleitfähigkeit der Wärmeleitschicht erzielt.

Ist hingegen eine besonders hohe mechanische Belastbarkeit der Wärmeleitschicht gewünscht, so ist es bevorzugt vorgesehen, dass die Schichtstärke der Kunststofffolienbahn mindestens der Schichtstärke der Metallschicht entspricht oder sogar größer ist. In diesem Fall ist beispielsweise die Schichtstärke der Kunststofffolienbahn um einen Faktor von mindestens 1,5, mindestens 2,0, mindestens 2,5, mindestens 3,0, mindestens 4,0 oder mindestens 5,0 größer als die Schichtstärke der Metallschicht. In absoluten Werten beträgt die Schichtstärke der Kunststofffolienbahn beispielsweise mindestens 0,12 mm und höchstens 1,5 mm, vorzugsweise mindestens 0,2 mm bis 1,0 mm oder mindestens 0,5 mm bis 0,75 mm. Die Schichtstärke der Metallschicht hingegen beträgt besonders bevorzugt mindestens 0,3 mm bis 0,6 mm, mindestens 0,4 mm bis 0,5 mm oder genau oder zumindest in etwa 0,5 mm. Mit einer solchen Ausgestaltung der Wärmeisolationsschicht wird eine besonders gute Wärmeleitfähigkeit bei gleichzeitig hervorragender Haltbarkeit der Fluidleitung erzielt.

Eine zweite Ausführungsvariante sieht vor, dass die Wärmeleitschicht den Metalldraht aufweist, der mit der Beschichtung versehen ist. Analog zu dem Umwickeln des Grundkörpers mit der Kunststofffolienbahn ist der Grundkörper im Rahmen der zweiten Ausführungsvariante mit dem Metalldraht umwickelt. Das bedeutet, dass der Metalldraht den Grundkörper in Umfangsrichtung bezüglich der Längsmittelachse der Fluidleitung wenigstens einmalig vollständig umgreift. Vorzugsweise umgreift der Metalldraht den Grundkörper jedoch mehrfach. Insbesondere erstreckt sich der Metalldraht über die gesamte Längserstreckung des Grundkörpers hinweg und umgreift ihn in Umfangsrichtung hierbei mindestens einmalig.

Um ein einfaches Aufbringen des Metalldrahts auf den Grundkörper zu gewährleisten und zudem eine hohe Dauerfestigkeit der Fluidleitung zu realisieren, wird der Metalldraht mit der Beschichtung versehen, bevor der Grundkörper mit ihm umwickelt wird. Die Beschichtung ist hierbei vorzugsweise derart ausgestaltet, dass ein Reibungskoeffizient zwischen dem Grundkörper und dem Metalldraht reduziert wird. In anderen Worten ist die Beschichtung beispielsweise derart gewählt, dass zwischen der Beschichtung und dem Grundkörper ein geringerer Reibungskoeffizient vorliegt als zwischen dem Metalldraht und dem Grundkörper. Hierdurch wird das Aufbringen auf den Grundkörper erleichtert.

Die Verwendung der Beschichtung ist zudem vorteilhaft, falls der Metalldraht Bestandteil eines Metallgeflechts ist. Dieses Metallgeflecht wird beispielsweise unmittelbar vor oder bei dem Aufbringen des Metalldrahts auf den Grundkörper ausgebildet, insbesondere mithilfe einer Geflechtmaschine. Die Verarbeitung des dünnen Metalldrahts beziehungsweise von dünnen Metalldrähten in einer solchen Geflechtmaschine stellt hohe Anforderungen an diese, insbesondere an Spulen, Klöppel und Stößel der Geflechtmaschine. Bei jeder Umlenkung des Metalldrahts in der Geflechtmaschine kann es zu einer erhöhten Zugspannung bedingt durch auf den Metalldraht wirkender Reibung kommen. Das bedeutet, dass zum einen auf den Metalldraht ohne die Beschichtung große Kräfte zum Ausbilden des Metallgeflechts mittels der Geflechtmaschine aufzubringen sind, und dass zum anderen der Metalldraht und/oder die Geflechtmaschine während des Ausbildens des Metallgeflechts abrasiv beansprucht werden. Mithilfe der Beschichtung können die aufzubringenden Kräfte sowie die Abrasion deutlich verringert werden, sodass die Herstellung der Fluidleitung deutlich vereinfacht wird.

Die zweite Ausführungsvariante kann anstelle der ersten Ausführungsvariante realisiert sein. Auch eine Kombination der ersten Ausführungsvariante und der zweiten Ausführungsvariante kann jedoch umgesetzt werden. In diesem Fall verfügt die Wärmeleitschicht sowohl über die Kunststofffolienbahn und die Metallschicht als auch über den Metalldraht. Hierbei können die Metallschicht und der Metalldraht separat voneinander vorliegen. Die Metallschicht kann jedoch auch von dem Metalldraht gebildet sein. Zum Beispiel liegt der Metalldraht auf der Kunststofffolienbahn zur Ausbildung der Metallschicht vor, wobei die Beschichtung des Metalldrahts von der Kunststofffolienbahn gebildet ist.

Das beschriebene Verfahren weist bevorzugt die folgenden Schritte auf, die insbesondere in der angegebenen Reihenfolge durchgeführt werden:
- Herstellen eines Wärmeleitschichtmaterials durch Aufbringen der Metallschicht auf die Kunststofffolienbahn oder durch Versehen des Metalldrahts mit der Beschichtung;
- Bereitstellen des Grundkörpers, des Wärmeleitschichtmaterials für die Wärmeleitschicht und eines Wärmeisolationsschichtmaterials für die Wärmeisolationsschicht;
- Ausbilden der Wärmeleitschicht durch Aufbringen des Wärmeleitschichtmaterials auf den Grundkörper und Ausbilden der Wärmeisolationsschicht durch Aufbringen des Wärmeisolationsschichtmaterials auf die Wärmeleitschicht, oder
- Ausbilden der Wärmeisolationsschicht durch Aufbringen des Wärmeisolationsschichtmaterials auf den Grundkörper und Ausbilden der Wärmeleitschicht durch Aufbringen des Wärmeleitschichtmaterials auf die Wärmeisolationsschicht, oder
- Ausbilden der Wärmeisolationsschicht und der Wärmeleitschicht durch gleichzeitiges Aufbringen des Wärmeisolationsschichtmaterials und des Wärmeleitschichtmaterials und den Grundkörper.

Hierbei erfolgt das Ausbilden zumindest der Wärmeleitschicht durch Umwickeln des Grundkörpers mit dem Wärmeleitschichtmaterial. Die Wärmeisolationsschicht wird bevorzugt durch Aufextrudieren oder Coextrudieren des Wärmeisolationsschichtmaterials hergestellt, insbesondere also durch Aufextrudieren des Wärmeisolationsschichtmaterials auf die Wärmeleitschicht oder durch Aufextrudieren oder Coextrudieren des Wärmeisolationsschichtmaterials auf den Grundkörper.

Eine Weiterbildung der Erfindung sieht vor, dass die Wärmeisolationsschicht auf der dem Grundkörper zugewandten Seite der Wärmeleitschicht angeordnet wird. In anderen Worten ist die Wärmeisolationsschicht im Querschnitt gesehen zwischen dem Grundkörper und der Wärmeleitschicht angeordnet. Bei einer solchen Ausgestaltung der Fluidleitung wird eine Wärmeübertragung von der Wärmeleitschicht auf den Grundkörper mittels der Wärmeisolationsschicht zumindest zeitweise verhindert oder zumindest verringert. Das bedeutet, dass eine lokale Wärmebeanspruchung des Grundkörpers bei einer thermischen Beaufschlagung deutlich verringert wird, weil die Wärme zuerst mittels der Wärmeleitschicht verteilt wird, bevor sie durch die Wärmeisolationsschicht zu dem Grundkörper gelangen kann.

Selbstverständlich kann jedoch auch die umgekehrte Reihenfolge der Wärmeisolationsschicht und der Wärmeleitschicht realisiert sein, sodass also die Wärmeisolationsschicht auf der dem Grundkörper abgewandten Seite der Wärmeleitschicht vorliegt. In diesem Fall wird bereits die Beanspruchung der Wärmeleitschicht mit Wärme mittels der Wärmeisolationsschicht verringert. Dies führt dazu, dass mithilfe der Wärmeleitschicht eine geringere Wärmemenge verteilt werden muss, sodass schlussendlich ebenfalls die thermische Belastung des Grundkörpers im Falle der thermischen Beaufschlagung realisiert ist. Unter der thermischen Beaufschlagung ist im Rahmen dieser Beschreibung eine Beaufschlagung der Fluidleitung aus ihrer Außenumgebung heraus zu verstehen, insbesondere mit einer offenen Flamme.

Eine Weiterbildung der Erfindung sieht vor, dass die Wärmeschutzschicht, insbesondere die Wärmeisolationsschicht, haftvermittellos zumindest bereichsweise mit dem Grundkörper verbunden wird. Die Wärmeschutzschicht schließt sich in diesem Fall im Querschnitt gesehen unmittelbar an den Grundkörper an. Bei einer solchen Ausgestaltung der Fluidleitung ist keine weitere Schicht zwischen der Wärmeschutzschicht und dem Grundkörper angeordnet, insbesondere keine Haftvermittlerschicht. Allenfalls liegt zwischen der Wärmeschutzschicht und dem Grundkörper ein Luftraum vor, sodass also die Wärmeschutzschicht nicht unmittelbar an dem Grundkörper anliegt. Im Querschnitt gesehen liegt die Wärmeschutzschicht jedoch in Umfangsrichtung zumindest bereichsweise an dem Grundkörper an, besonders bevorzugt vollständig. Beispielsweise liegt die Wärmeschutzschicht gleitend an dem Grundkörper an, sodass zwischen der Wärmeschutzschicht und dem Grundkörper eine Relativbewegung, insbesondere in axialer Richtung und/oder in Umfangsrichtung bezüglich der Längsmittelachse der Fluidleitung, zugelassen ist. Hierdurch wird eine Biegbarkeit der Fluidleitung deutlich verbessert.

Eine Weiterbildung der Erfindung sieht vor, dass die Wärmeleitschicht und/oder der Metalldraht den Grundkörper schraubenförmig mehrfach umgreifend angeordnet werden/wird. Hierauf wurde vorstehend bereits hingewiesen. Die schraubenförmige beziehungsweise helixförmige Anordnung hat den Vorteil, dass zum einen eine einfache Herstellbarkeit der Fluidleitung realisiert ist und zum anderen ein zuverlässiger Schutz des Grundkörpers vor thermischer Belastung mithilfe der Wärmeschutzschicht erzielt wird.

Eine Weiterbildung der Erfindung sieht vor, dass die Wärmeleitschicht derart angeordnet wird, dass die Metallschicht im Querschnitt gesehen zwischen der Kunststofffolienbahn und dem Grundkörper vorliegt. Die Metallschicht ist also zwischen dem Grundkörper und der Kunststofffolienbahn aufgenommen. Beispielsweise liegt die Metallschicht unmittelbar an dem Grundkörper oder der Wärmeisolationsschicht an, wohingegen die Kunststofffolienbahn von der Metallschicht von dem Grundkörper beziehungsweise der Wärmeisolationsschicht beabstandet ist. Eine derartige Anordnung der Wärmeleitschicht hat den Vorteil, dass die Kunststofffolienbahn einen mechanischen Schutz für die Metallschicht bereitstellt. Zudem dient die Kunststofffolienbahn als zusätzliche Wärmeisolationsschicht, sodass die Beaufschlagung der Metallschicht mit Wärme aus der Außenumgebung heraus verringert und/oder verzögert wird.

Die Verwendung der Kunststofffolienbahn als zusätzliche Wärmeisolationsschicht vereinfacht zudem das Aufbringen weiterer Schichten auf die Wärmeschutzschicht auf ihrer dem Grundkörper abgewandten Seite. Beispielsweise kann mithilfe der Kunststofffolienbahn eine Schicht auf die Wärmeleitschicht aufgebacht werden, welche eine Schmelztemperatur aufweist, die sich von einer Schmelztemperatur der Wärmeschutzschicht und/oder einer Schmelztemperatur des Grundkörpers unterscheidet, insbesondere höher ist. Das Aufbringen der zusätzlichen Schicht erfolgt beispielsweise durch Coextrudieren oder Aufextrudieren. Grundsätzlich dienen die Wärmeleitschicht und die Wärmeisolationsschicht als Schutz für weiter innen liegende Schichten während eines Aufbringens einer weiter außen liegenden Schicht.

Eine Weiterbildung der Erfindung sieht vor, dass die Metallschicht mit einer im Vergleich mit der Kunststofffolienbahn geringeren Breite ausgebildet wird, sodass die Kunststofffolienbahn einseitig oder beidseitig der Metallschicht eine metallschichtfreie Randzone aufweist. Bei der lediglich einseitig der Metallschicht vorliegenden Randzone schließt die Metallschicht auf der der Randzone gegenüberliegenden Seite bündig mit der Kunststofffolienbahn ab. Liegt hingegen beidseitig der Metallschicht jeweils eine Randzone der Kunststofffolienbahn vor, so ist die Metallschicht beidseitig von Rändern der Kunststofffolienbahn beabstandet angeordnet. Beispielsweise ist die Metallschicht mittig auf die Kunststofffolienbahn aufgebracht, sodass die Randzonen der Kunststofffolienbahn dieselbe Breite aufweisen.

Die Randzone beziehungsweise die Randzonen ermöglichen eine besonders gute Haftung der Wärmeleitschicht an dem Grundkörper oder der Wärmeisolationsschicht oder auf der Wärmeleitschicht selbst und/oder die Realisierung einer äußerst homogenen Oberfläche auf der dem Grundkörper abgewandten Seite der Wärmeleitschicht. In letzterem Fall bildet zum Beispiel die Wärmeleitschicht beziehungsweise ihre kunststofffolienbahn die Außenschicht der Fluidleitung. Hierdurch kann ein weiterer Bearbeitungsschritt zum Ausbilden der Außenschicht, zum Beispiel ein Aufextrudieren einer solchen Außenschicht, unterbleiben. Beispielsweise weist die Metallschicht eine Breite auf, die kleiner ist als ein Außenumfang des Grundkörpers, wohingegen die Kunststofffolienbahn eine Breite aufweist, die mindestens dem Außenumfang entspricht oder größer ist. Alternativ kann die Metallschicht jedoch selbstverständlich eine dem Außenumfang entsprechende oder größere Breite aufweisen.

Eine Weiterbildung der Erfindung sieht vor, dass die Wärmeleitschicht derart angeordnet wird, dass die Randzone oder eine der Randzonen einen anderen Bereich der Wärmeleitschicht zumindest bereichsweise überlappen. Nach dem Umwickeln des Grundkörpers mit der Wärmeleitschicht übergreift die Randzone beziehungsweise die eine der Randzonen den benachbarten Bereich der Wärmeleitschicht. Die Randzone beziehungsweise die eine der Randzonen ist vorzugsweise einer Windung der Wärmeleitschicht angeordnet und der andere Bereich einer anderen Windung, welche vorzugsweise unmittelbar an die eine Windung anschließt. Beispielsweise erfolgt das Umwickeln des Grundkörpers mit der Wärmeleitschicht derart, dass keine Überlappung der Metallschicht vorliegt, sodass also die Metallschicht der einen Windung überlappungsfrei zu der Metallschicht der anderen Windung angeordnet ist. Die Metallschichten grenzen insoweit allenfalls unmittelbar aneinander oder sind sogar in Längsrichtung der Fluidleitung voneinander beabstandet. Hierdurch ist eine besonders kosteneffiziente Realisierung der Wärmeleitschicht umgesetzt.

Eine Weiterbildung der Erfindung sieht vor, dass die Wärmeleitschicht nach ihrem Anordnen derart wärmebehandelt wird, dass die Randzone oder eine der Randzonen zumindest bereichsweise mit dem anderen Bereich der Wärmeleitschicht verschmilzt. Eine derartige Vorgehensweise ist bevorzugt vorgesehen, falls die Kunststofffolienbahn auf der dem Grundkörper abgewandten Seite der Metallschicht angeordnet ist. Beispielsweise stellt die Kunststofffolienbahn hierbei eine Außenschicht der Fluidleitung dar, also eine nach Herstellung der Fluidleitung diese nach außen begrenzende Schicht. Durch das Wärmebehandeln der Wärmeleitschicht ergibt sich eine besonders einheitliche Oberfläche. Bei dem Wärmebehandeln verschmilzt vorzugsweise die Kunststofffolienbahn, insbesondere die Randzone, der einen Windung mit einem der anderen Windung zugeordneten Bereich der Wärmeleitschicht, also beispielsweise mit einem Teil der Kunststofffolienbahn, insbesondere der Randzone der Kunststofffolienbahn.

Eine Weiterbildung der Erfindung sieht vor, dass die Wärmeleitschicht derart angeordnet wird, dass eine erste Seite der Metallschicht an eine der ersten Seite gegenüberliegende zweite Seite der Metallschicht überlappungsfrei angrenzt oder diese überlappt. Hierauf wurde vorstehend bereits hingewiesen. Nach der Anordnung der Wärmeleitschicht an dem Grundkörper soll in Längsrichtung der Fluidleitung gesehen gemäß einer ersten Ausgestaltung keine Überlappung zwischen der Metallschicht benachbarter Windungen der Wärmeleitschicht vorliegen. Hierzu grenzt die erste Seite der Metallschicht der einen Windung an die zweite Seite der Metallschicht der anderen Windung überlappungsfrei an, schließt also vorzugsweise bündig mit dieser ab oder ist beabstandet zu ihr angeordnet. In letzterem Fall ist in axialer Richtung keine durchgehende Ausbildung der Metallschicht umgesetzt, sondern vielmehr treten in axialer Richtung Lücken der Metallschicht auf. Hierdurch wird eine kostengünstige und einfache Herstellung der Wärmeleitschicht realisiert. Gemäß einer zweiten Ausgestaltung liegt eine solche Überlappung vor. Hierdurch kann auf einfache Art und Weise sichergestellt werden, dass auch bei einer Biegebeanspruchung der Fluidleitung die Metallschicht unterbrechungsfrei verläuft.

Eine Weiterbildung der Erfindung sieht vor, dass der Metalldraht in den Grundkörper oder die Wärmeisolationsschicht bei einer Temperatur eingebettet wird, die größer ist als eine jeweilige Glasübergangstemperatur und/oder Erstarrungstemperatur. Bei dem Umwickeln des Grundkörpers mit dem Metalldraht wird der Metalldraht auf den Grundkörper oder die Wärmeisolationsschicht aufgebracht. Bei dem Aufbringen des Metalldrahts weist der Grundkörper beziehungsweise die Wärmeisolationsschicht eine Temperatur auf, die ein Eindringen des Metalldrahts in den Grundkörper beziehungsweise die Wärmeisolationsschicht ermöglicht. Die Temperatur ist also so gewählt, dass der Grundkörper beziehungsweise die Wärmeisolationsschicht durch das Aufbringen des Metalldrahts plastisch verformbar sind, sodass der Metalldraht in den Grundkörper beziehungsweise die Wärmeisolationsschicht eindringt und nachfolgend in dieser zumindest bereichsweise eingebettet ist.

Beispielsweise steht nach dem Aufbringen beziehungsweise Einbringen des Metalldrahts in den Grundkörper beziehungsweise die Wärmeisolationsschicht der Grundkörper beziehungsweise die Wärmeisolationsschicht in radialer Richtung über den Metalldraht über, vorzugsweise in Umfangsrichtung und/oder in axialer Richtung durchgehend. Vorzugsweise ist jedoch der Metalldraht lediglich bereichsweise und nicht vollständig in den Grundkörper beziehungsweise die Wärmeisolationsschicht eingebettet. Die Temperatur, welche der Grundkörper beziehungsweise die Wärmeisolationsschicht aufweist, entspricht beispielsweise der Glasübergangstemperatur und/oder der Erstarrungstemperatur des Grundkörpers beziehungsweise der Wärmeisolationsschicht. Durch das Einbetten des Metalldrahts wird eine formschlüssige Verbindung zwischen der Wärmeleitschicht und dem Grundkörper beziehungsweise der Wärmeisolationsschicht geschaffen, sodass eine besonders gute mechanische Beständigkeit realisiert ist.

Eine Weiterbildung der Erfindung sieht vor, dass als Beschichtung für den Metalldraht ein Kunststoff und/oder ein Haftvermittler verwendet wird. Die Beschichtung kann also als Kunststoffbeschichtung vorliegen. Der Kunststoff ist - wie bereits erwähnt - vorzugsweise derart gewählt, dass er die Gleitfähigkeit der Wärmeleitschicht bezüglich des Grundkörpers beziehungsweise der Wärmeisolationsschicht verbessert. Der Kunststoff ist beispielsweise ein thermoplastisches Elastomer. Alternativ kann auch Polytetrafluorethylen als Kunststoff verwendet werden. Zusätzlich oder alternativ dient der Kunststoff als Haftvermittler, also zur Verbesserung der Anhaftung des Metalldrahts an dem Grundkörper beziehungsweise der Wärmeisolationsschicht. Hierzu ist der Kunststoff entsprecht gewählt. Eine solche Ausgestaltung ist bevorzugt vorgesehen, falls der Metalldraht in den Grundkörper oder die Wärmeisolationsschicht eingebettet wird.

Der Haftvermittler ist bevorzugt derart gewählt, dass er eine Schichthaftung zwischen dem Grundkörper beziehungsweise der Wärmeisolationsschicht einerseits sowie einer weiteren Schicht, insbesondere der Wärmeschutzschicht, verbessert. Er kann auch derart gewählt sein, dass er eine Schichthaftung zwischen dem Grundkörper und der Wärmeisolationsschicht verbessert, falls die Wärmeleitschicht im Querschnitt gesehen zwischen dem Grundkörper und der Wärmeisolationsschicht angeordnet ist. Hierdurch wird eine besonders hohe Dauerhaltbarkeit der Fluidleitung erzielt.

Eine Weiterbildung der Erfindung sieht vor, dass der Metalldraht in die Beschichtung eingebettet wird, und/oder dass die Beschichtung durch Plasmabeschichten aufgebracht wird. Der Metalldraht kann insoweit nach Art einer Verstärkungsfaser in die Beschichtung eingebettet werden, welche insoweit als Matrix eines aus dem Metalldraht und der Beschichtung gebildeten Faserverbundwerkstoffs dient. Falls als Beschichtung der Kunststoff verwendet wird, kann der Faserverbundwerkstoff auch als Faserverbundkunststoff beziehungsweise als faserverstärkter Kunststoff bezeichnet werden. Das Einbetten des Metalldrahts, insbesondere ein vollständiges Einbetten des Metalldrahts, in die Beschichtung ermöglicht ein besonders einfaches Verarbeiten des Metalldrahts beziehungsweise ein besonders einfaches Umwickeln des Grundkörpers mit dem Metalldraht. Zusätzlich oder alternativ wird die Beschichtung durch Plasmabeschichten aufgebracht. Beispielsweise wird als Beschichtung ein Precursor verwendet, welcher mittels eines Plasmas auf das Metall aufgebracht wird. Hierdurch wird vorzugsweise eine Aktivierung des Metalldrahts erzielt, sodass nachfolgend eine verbesserte Schichthaftung zwischen dem Metalldraht und dem Grundkörper beziehungsweise der Wärmeisolationsschicht realisiert ist.

Eine Weiterbildung der Erfindung sieht vor, dass der Metalldraht Bestandteil eines Metallgeflechts ist, welches mit offenen Maschen ausgebildet wird. Auf die Möglichkeit der Verwendung des Metallgeflechts wurde bereits hingewiesen. Das Metallgeflecht umgreift vorzugsweise den Grundkörper im Querschnitt gesehen in Umfangsrichtung vollständig. Zusätzlich oder alternativ liegt das Metallgeflecht über die gesamte Erstreckung des Grundkörpers in Längsrichtung beziehungsweise in axialer Richtung vor. Das Metallgeflecht weist bevorzugt zusätzlich zu dem Metalldraht wenigstens einen weiteren Metalldraht, besonders bevorzugt mehrere weitere Metalldrähte auf. Es kann vorgesehen sein, dass ein Teil der Metalldrähte parallel zueinander verläuft.

Es kann jedoch auch vorgesehen sein, dass die Metalldrähte gegeneinander angewinkelt verlaufen. In jedem Fall soll das Metallgeflecht offene Maschen aufweisen, wobei die Maschen von dem Metalldraht oder den Metalldrähten in wenigstens einer Richtung begrenzt sind, insbesondere als randgeschlossene Maschen vorliegen, also einen durchgehenden Rand aufweisen. Die Verwendung des Metallgeflechts stellt eine robuste Ausgestaltung der Fluidleitung bei gleichzeitig hoher Wärmeleitfähigkeit der Wärmeleitschicht sicher.

Eine Weiterbildung der Erfindung sieht vor, dass die Wärmeschutzschicht zusätzlich zu der Wärmeisolationsschicht wenigstens eine weitere Wärmeisolationsschicht aufweist, die auf der der Wärmeisolationsschicht abgewandten Seite der Wärmeleitschicht ausgebildet wird, und/oder dass die Wärmeschutzschicht zusätzlich zu der Wärmeleitschicht wenigstens eine weitere Wärmeleitschicht aufweist, die auf der der Wärmeleitschicht abgewandten Seite der Wärmeisolationsschicht oder der weiteren Wärmeisolationsschicht ausgebildet wird. Grundsätzlich kann die Wärmeschutzschicht also eine beliebige Anzahl an Wärmeisolationsschichten und/oder Wärmeleitschichten aufweisen. Besonders bevorzugt wechseln sich in der Wärmeschutzschicht die Wärmeisolationsschichten und die Wärmeschutzschichten ab. Das bedeutet, dass jede der Wärmeisolationsschichten zwischen zwei Wärmeleitschichten und/oder jede Wärmeleitschicht zwischen zwei Wärmeisolationsschichten aufgenommen ist. Durch eine solche Ausgestaltung der Wärmeschutzschicht wird die Wärmeleitung in radialer Richtung, also in Richtung des Grundkörpers zumindest teilweise unterbunden, wohingegen in Umfangsrichtung und/oder in axialer Richtung eine gute Wärmeleitfähigkeit mittels der wenigstens einen Wärmeleitschicht realisiert ist.

Bei dem Vorliegen der weiteren Wärmeisolationsschicht hat die Verwendung des Metalldrahts als Wärmeleitschicht besondere Vorteile. So dient der Metalldraht mit der Beschichtung als Haftvermittler zwischen den an die Wärmeleitschicht angrenzenden Wärmeisolationsschichten, also zum Beispiel der Wärmeisolationsschicht und der weiteren Wärmeisolationsschicht. Die Wärmeisolationsschichten bestehen zum Beispiel aus unterschiedlichen Materialien und/oder weisen unterschiedliche Eigenschaften auf, insbesondere unterschiedliche Wärmeleitkoeffizienten.

Selbstverständlich kann es auch vorgesehen sein, eine Wärmeleitschicht mit der Kunststofffolienbahn und der Metallschicht und eine Wärmeleitschicht mit dem Metalldraht zu verwenden, zwischen welchen die Wärmeisolationsschicht angeordnet ist. Liegen also mehrere Wärmeleitschichten vor, so können diese unterschiedlich ausgestaltet sein. Insbesondere weist wenigstens eine der Wärmeleitschichten die Kunststofffolienbahn und die Metallschicht und wenigstens eine andere der Wärmeleitschichten den Metalldraht mit der Beschichtung auf.

Eine Weiterbildung der Erfindung sieht vor, dass für die weitere Wärmeisolationsschicht eine Schmelztemperatur gewählt wird, die von einer Schmelztemperatur der Wärmeisolationsschicht verschieden ist. Die weitere Wärmeisolationsschicht besteht also aus einem Material, welches eine andere Schmelztemperatur aufweist als das Material der Wärmeisolationsschicht. Besonders bevorzugt wird die Schmelztemperatur der Wärmeisolationsschichten der Wärmeschutzschicht in radialer Richtung nach außen stetig höher, sodass eine weiter außenliegende der Wärmeisolationsschichten eine höhere Schmelztemperatur aufweist als eine weiter innenliegende der Wärmeisolationsschichten. Beispielsweise weist die am weitesten innenliegende Wärmeisolationsschicht dieselbe oder eine höhere Schmelztemperatur auf wie der Grundkörper beziehungsweise eine äußerste Schicht des Grundkörpers. Mit zunehmendem Abstand von dem Grundkörper erhöht sich die Schmelztemperatur der Wärmeisolationsschichten. Hierdurch wird eine besonders hohe Temperaturbeständigkeit der Fluidleitung erzielt.

Die Erfindung betrifft weiterhin eine Fluidleitung für ein Fluid, insbesondere hergestellt gemäß dem im Rahmen dieser Beschreibung erläuterten Verfahren, wobei die Fluidleitung einen Grundkörper mit wenigstens einer aus Kunststoff bestehenden Schicht aufweist. Dabei ist vorgesehen, dass auf den Grundkörper wenigstens eine als Wärmeschutzschicht ausgebildete Mantelschicht aufgebracht ist, die über wenigstens eine Wärmeisolationsschicht sowie zumindest eine metallische Wärmeleitschicht verfügt, wobei die Wärmeleitschicht eine den Grundkörper umwickelnde Kunststofffolienbahn und eine auf die Kunststofffolienbahn vor dem Umwickeln des Grundkörpers aufgebrachte Metallschicht aufweist oder wobei die Wärmeleitschicht wenigstens einen den Grundkörper umwickelnden Metalldraht aufweist, der vor dem Umwickeln des Grundkörpers mit einer Beschichtung versehen ist.

Auf die Vorteile einer derartigen Ausgestaltung der Fluidleitung sowie der beschriebenen Vorgehensweise wurde bereits hingewiesen. Sowohl die Fluidleitung als auch das Verfahren zu ihrer Herstellung können gemäß den Ausführungen im Rahmen dieser Beschreibung weitergebildet sein, sodass insoweit auf diese verwiesen wird.

Verschärft wird die Problematik der Flammbeständigkeit häufig dadurch, dass die Fluidleitung in einem Bauraum eingesetzt sein kann, in welchem es zu einem Berührkontakt der Fluidleitung mit einem anderen Bauteil kommen kann. Dies ist insbesondere der Fall, falls die Fluidleitung in dem Motorraum des Kraftfahrzeugs eingesetzt wird. Der Bauraum in einem solchen Motorraum wird durch die zunehmende Komplexität der Aggregate in Kombination mit höheren Sicherheits- und Komfortforderungen immer enger. Dies betrifft vor allem Fluidleitungen, die oft auch im Zuge einer zunehmenden Variantenvielfalt der Kraftfahrzeuge um sich ändernde Bauteile herum angeordnet werden müssen. Die üblichen Konstruktionsrichtlinien für derartige Fluidleitungen, die einen allseitigen Mindestfreigang zu benachbarten Elementen aufgrund von Bauteil-, Kontur- und Einbautoleranzen und nicht zuletzt zum Ausgleich von Bewegungen des Kraftfahrzeugs sowie Verformungen aufgrund von Wärmedehnungen und/oder Dehnungen aufgrund von Innendrücken vorsehen, können teilweise nicht mehr eingehalten werden.

Dies führt dazu, dass mit Kontaktstellen der Fluidleitung zu einem oder mehreren Bauteilen gerechnet werden muss. Somit liegt ein statischer oder dynamischer Kontakt der Fluidleitung mit dem Bauteil vor. Dieser darf jedoch über die Lebensdauer des Kraftfahrzeugs hinweg nicht dazu führen, dass die Fluidleitung durch Abrieb oder andere Beschädigungen undicht wird oder sogar birst. Somit sind für die Fluidleitung konkrete Maßnahmen für einen Scheuerschutz zu treffen. Beispielsweise kann es hierbei vorgesehen sein, dass ein Scheuerschutzelement formschlüssig und/oder kraftschlüssig an dem Grundkörper angeordnet wird. Dies ist jedoch aufwändig, weil einerseits das Scheuerschutzelement separat von der Fluidleitung hergestellt wird und zum anderen nachfolgend an ihr angeordnet werden muss.

Aus diesem Grund kann es vorgesehen sein, dass eine Scheuerschutzschicht durch Extrudieren aufgebracht wird, nämlich auf die Wärmeschutzschicht beziehungsweise Mantelschicht. Das bedeutet, dass die Scheuerschutzschicht stoffschlüssig mit der Wärmeschutzschicht beziehungsweise einer Außenschicht der Wärmeschutzschicht verbunden wird. Als Extrudieren kann hierbei beispielsweise ein Aufextrudieren oder ein Coextrudieren verwendet werden. Das Aufextrudieren der Scheuerschutzschicht auf den Grundkörper erfolgt nach dem Ausbilden des Grundkörpers. Es wird also zunächst der Grundkörper hergestellt beziehungsweise ausgebildet, vorzugsweise ebenfalls durch Extrudieren. Anschließend wird die Scheuerschutzschicht auf den bereits ausgebildeten, insbesondere extrudierten, Grundkörper aufextrudiert. Die Scheuerschutzschicht weist beispielsweise eine Schichtstärke von mindestens 0,1 mm bis höchstens 0,5 mm auf. Vorzugsweise beträgt sie mindestens 0,3 mm bis höchstens 0,5 mm.

Besonders bevorzugt wird die Scheuerschutzschicht gleichzeitig mit der Wärmeschutzschicht ausgebildet und hierbei stoffschlüssig mit dieser verbunden. Hierzu kommt insbesondere das Coextrudieren zum Einsatz, bei welchem sowohl die Wärmeschutzschicht als auch die Scheuerschutzschicht gleichzeitig durch Extrudieren ausgebildet und aneinander befestigt werden. Das Extrudieren der Scheuerschutzschicht erfolgt beispielsweise mithilfe eines Querkopfextruders, insbesondere eines dreizonigen Einschnecken-Extruders. Der Extruder verfügt vorzugsweise über ein Kompressionsverhältnis von mindestens 2,5 und/oder ein L:T-Verhältnis von mindestens 20 bis höchstens 40, insbesondere von mindestens 25 bis höchstens 30. Der Extruder ist vorzugsweise strömungsgünstig gestaltet, um eine thermische Beschädigung des Materials der Scheuerschutzschicht in Totzonen zu vermeiden.

Die Scheuerschutzschicht besteht vorzugsweise aus einem thermoplastischen Polyurethan. Das thermoplastische Polyurethan gehört zur Produktklasse der thermoplastischen Elastomere (TPE). Es kann in vernetzter oder unvernetzter Form eingesetzt werden. Die Eigenschaften des Polyurethans können in einem weiten Rahmen anwendungsspezifisch variiert werden. Je nach Vernetzungsgrad und/oder eingesetzter Isocyanat- oder OH- Komponente erhält man ein Duroplast, ein Thermoplast, ein Elastomer oder ein thermoplastisches Elastomer. Das thermoplastische Polyurethan, welches auch als TPU oder TPE-U bezeichnet werden kann, ist ein thermoplastisches Elastomer, also ein Kunststoff, der sich bei Raumtemperatur vergleichbar den klassischen Elastomeren verhält, sich jedoch unter Wärmezufuhr plastisch verformen lässt und somit ein thermoplastisches Verhalten zeigt. Dies ist insbesondere für die Verarbeitung von großer Bedeutung.

Das thermoplastische Polyurethan kann extrudiert, spritzgeformt oder auch blasgeformt werden. Es ist ein Blockpolymer, das bedeutet, dass die Hartsegmente und die Weichsegmente in einem Molekül scharf voneinander getrennt sind. Das thermoplastische Polyurethan kann auf gute Hydrolyseeigenschaften, Mineralölbeständigkeit, Wärmeformbeständigkeit, Kälteflexibilität, UV- und/oder Ozonstabilität und/oder Festigkeit eingestellt werden. Der E-Modul des thermoplastischen Polyurethans wird vorzugsweise derart eingestellt, dass er zwischen Elastomeren und Polyamiden liegt. Die Härte wird bevorzugt in einem Bereich von 60 Shore (A) bis 95 Shore (A) eingestellt. Damit ist eine Thermoverformbarkeit der Fluidleitung mit geringem Rückstellverhalten erzielbar. Die Glasübergangstemperatur des Polyurethans liegt vorzugsweise zwischen -30 °C und -40 °C. Hierdurch wird eine ausreichende Kälteflexibilität der Fluidleitung erzielt.

Das thermoplastische Polyurethan wirkt besonders bevorzugt schwingungsdämpfend, was sich positiv auf die Akustik der Fluidleitung während einer Durchströmung mit dem Fluid auswirkt. Das Polyurethan weist ebenso eine hohe Kälteschlagfestigkeit auf. Die Wärmeformbeständigkeit kann ebenso wie die Dauergebrauchstemperatur in einem weiten Bereich eingestellt werden. Die chemische Beständigkeit gegenüber im Automobilbereich verwendeten Medien sowie gegen Streusalz ist gut. Besonders bevorzugt ist die Abriebfestigkeit des thermoplastischen Polyurethans durch Zugabe eines EVA-basierten Masterbatches weiter verbessert, wobei die Zudosierung besonders bevorzugt zwischen 1 % und 10 % liegt. Weiterhin kann es vorgesehen sein, einen Reibkoeffizient der Oberfläche des thermoplastischen Polyurethans durch wenigstens ein Additiv auf polymerer Basis zu senken.

Die Abriebfestigkeit der Fluidleitung kann weiterhin durch das Ausbilden einer Oberflächenstruktur auf der Scheuerschutzschicht verbessert werden. Hierzu werden beispielsweise während des Extrudierens beziehungsweise durch das Extrudieren auf der Scheuerschutzschicht Längsstreifen ausgebildet, die sich bezüglich einer Längsmittelachse der Fluidleitung in axialer Richtung erstrecken, insbesondere durchgehend erstrecken. Zusätzlich oder alternativ können auf der Scheuerschutzschicht Querstreifen oder eine Kreuzstruktur aus Längsstreifen und Querstreifen ausgebildet werden. Die Längsstreifen und/oder Querstreifen liegen in Form von Erhebungen auf einer Oberfläche der Fluidleitung vor. Bevorzugt ist es vorgesehen, dass bei dem Extrudieren das thermoplastische Polyurethan in Form eines Granulats zugeführt wird. Zur Verbesserung der Extrudierbarkeit kann dem Granulat ein Gleitmittel beigemengt sein. Selbstverständlich ist es auch möglich, das thermoplastische Polyurethan vor dem Aufbringen zu färben. Hierzu wird beispielsweise das Granulat gefärbt beziehungsweise dem Granulat ein Farbbatch beigemengt.

Zur zusätzlichen Erhöhung der Sicherheit kann es vorgesehen sein, dass die Scheuerschutzschicht mit einer Flammschutzschicht versehen wird. Die Flammschutzschicht liegt hierbei vorzugweise auf der dem Grundkörper abgewandten Seite der Scheuerschutzschicht vor, sodass die Flammschutzschicht insoweit eine Außenschicht der Fluidleitung darstellt. Zusätzlich oder alternativ kann es vorteilhafterweise vorgesehen sein, zwischen dem Grundkörper und der Scheuerschutzschicht eine metallische Schicht anzuordnen, und/oder die Fluidleitung mit wenigstens einem Heizleiter zu versehen. Die metallische Schicht dient beispielsweise zur Erhöhung einer Flammbeständigkeit der Fluidleitung. Die metallische Schicht weist beispielsweise ein metallisches Geflecht oder eine metallische Folie auf, die zwischen dem Grundkörper und der Scheuerschutzschicht angeordnet ist, insbesondere zwischen dem Grundkörper und der Wärmeschutzschicht. Die metallische Schicht wird insoweit von der Wärmeschutzschicht zuverlässig an dem Grundkörper gehalten. Die metallische Schicht, das metallische Geflecht beziehungsweise die metallische Folie besteht aus Metall oder weist zumindest Metall auf.

Zusätzlich oder alternativ kann der Heizleiter an beziehungsweise in der Fluidleitung vorliegen.

Beispielsweise ist der Heizleiter in dem Grundkörper eingebettet oder liegt zwischen dem Grundkörper und der Wärmeschutzschicht vor. Der Heizleiter dient einem Beheizen der Fluidleitung mit elektrischer Energie. Insoweit ist in die Fluidleitung eine elektrische Heizung integriert. Beispielweise kann mit einer solchen ein Erstarren des Fluids in der Fluidleitung unterbunden werden beziehungsweise ein erstarrtes Fluid wieder aufgetaut werden. Während es selbstverständlich vorgesehen sein kann, dass der Heizleiter nach dem Ausbilden der Fluidleitung an dieser befestigt werden kann, ist dies jedoch aufgrund der dazu notwendigen manuellen Arbeit aufwendig und kostenträchtig. Beispielsweise wird der Heizleiter wendelförmlich in einer Schraubenlinie angeordnet. Die schraubenförmige Gestalt sichert eine gute Biegbarkeit der Fluidleitung.

Es kann vorgesehen sein, dass der Heizleiter in der Wärmeschutzschicht angeordnet beziehungsweise in diese eingebettet wird. Beispielsweise liegt er zwischen der Wärmeisolationsschicht und der Wärmeleitschicht vor oder bildet die Wärmeleitschicht aus oder zumindest mit aus. Alternativ kann er in die Wärmeisolationsschicht eingebettet sein. Nicht zuletzt in diesem Fall ist es möglich, einen unisolierten Heizleiter zu verwenden, weil die Wärmeisolationsschicht eine hinreichend gute elektrische Isolationswirkung aufweist. Beispielsweise können mehrere Heizleiter, insbesondere unisolierte Heizleiter, beabstandet voneinander, insbesondere parallel beabstandet voneinander, verwendet werden. Es ist auch möglich, den Heizleiter in die metallische Schicht oder die Wärmeisolationsschicht zu integrieren, um eine verbesserte Wärmeverteilung zu realisieren. Beispielsweise wird hierbei der wenigstens eine Heizleiter in das metallische Geflecht eingebettet, das auf den Grundkörper aufgesetzt wird. Anschließend wird die Scheuerschutzschicht auf den Grundkörper aufgebracht, welche insoweit die metallische Schicht und den Heizleiter umschließt.

Mithilfe des metallischen Geflechts kann eine sichere Abstandsführung von mehreren Heizleitern erzielt werden. Beispielsweise weist hierzu das Geflecht Poren mit einer bestimmten Porenweite auf. Die Poren erlauben eine lokale Haftung zwischen dem thermoplastischen Polyurethan und dem Grundrohr. Anstelle des metallischen Geflechts kann auch ein Textilgeflecht verwendet werden, welches vorzugweise elektrisch isolierend ist. In diesem Fall kann der wenigstens eine Heizleiter wiederum unisoliert verwendet werden. Es kann auch vorgesehen sein, dass der wenigstens eine Heizleiter aus einem elektrisch leitfähigen Textilfaden besteht. Es kann zudem vorgesehen sein, an Ablängstellen der Fluidleitung ein Abmantelungshilfsmaterial zu verwenden. Es ist weiter denkbar, an den Ablängstellen eine Anschlussstelle des Heizleiters vorzusehen, insbesondere indem der Heizleiter in einer Schleife verlegt wird, sodass ein überschüssiger Bereich des Heizleiters zur Herstellung einer Kontaktstelle zur Verfügung steht. Anstelle des Heizleiters kann grundsätzlich auch ein beliebiger elektrischer Leiter verwendet werden. Ein solcher kann beispielsweise der Sensierung einer Anbindung der Fluidleitung an weitere Einrichtungen und/oder einer Undichtheit dienen.

Das für die Scheuerschutzschicht verwendete thermoplastische Polyurethan weist beispielsweise eine Dichte von mindestens 1,15 g/cm³ bis höchstens 1,6 g/cm³, insbesondere von mindestens 1,20 g/cm³ bis höchstens 1,30 g/cm³, auf. Zusätzlich oder alternativ weist das Polyurethan eine Härte nach Shore A von mindestens 85 bis höchstens 98 auf. Zusätzlich oder alternativ ist eine Zugfestigkeit von mindestens 26 bis höchstens 40 MPa vorgesehen. Der Abrieb beträgt besonders bevorzugt mindestens 35 mm³ bis 90 mm³. Als Polyurethan kann beispielsweise Elastollan^{®} verwendet werden, das in unterschiedlichen Typen von BASF vertrieben wird.

Beispielsweise weist der Grundkörper eine erste Schicht aus einem Fluorpolymer, eine unmittelbar auf die erste Schicht folgende zweite Schicht aus einem Polyamid und eine unmittelbar auf die zweite Schicht folgende dritte Schicht auf. Die genannten Schichten folgen jeweils unmittelbar aufeinander, sodass also die zweite Schicht unmittelbar an der ersten Schicht und die dritte Schicht unmittelbar an der zweiten Schicht anliegt. In anderen Worten ist die zweite Schicht zwischen der ersten Schicht und der dritten Schicht angeordnet und liegt einerseits an der ersten Schicht und andererseits an der dritten Schicht an. Vorzugweise ist die erste Schicht und/oder die zweite Schicht und/oder die dritte Schicht jeweils für sich genommen materialeinheitlich ausgestaltet, sodass die jeweilige Schicht vollständig und durchgehend aus dem jeweils bezeichneten Material besteht.

Die erste Schicht der Fluidleitung kann zumindest teilweise, vorzugsweise jedoch vollständig, aus dem Fluorpolymer bestehen. Unter dem Fluorpolymer ist ein fluoriertes Polymer zu verstehen. Es zeichnet sich durch eine hohe Beständigkeit gegenüber Chemikalien und hohen Temperaturen, in anderen Worten also durch eine hohe Chemikalienbeständigkeit und/oder über hohe Temperaturbeständigkeit aus. Das Fluorpolymer kann grundsätzlich beliebig ausgestaltet sein. Beispielsweise liegt es in Form von Ethylen-Tetrafluorethylen-Copolymer (ETFE), Polytetrafluorethylen (PTFE), Tetrafluorethylen-Hexafluorpropylen-Copolymer (FEP), Polychlortrifluorethylen (PCTFE) oder Ethylen-Tetrafluorethylen-Hexafluorpropylen (EFEP) vor. Es sei jedoch darauf hingewiesen, dass die erste Schicht auch aus einem anderen Material bestehen kann.

Die zweite Schicht besteht aus Polyamid, beispielsweise aus PA6, PA612, PA6/66, PA616 oder einem teilaromatischen Polyamid. Unter dem teilaromatischen Polyamid ist ein teilweise kristallines aromatisches Polyamid zu verstehen, welches auch als Polyphthalamid (PPA) bezeichnet werden kann. Das Polyamid kann zur Verbesserung seiner mechanischen Festigkeit verstärkt sein und hierzu einen Zusatzstoff oder eine Faserverstärkung aufweisen. Als Zusatzstoff kommt beispielsweise gemahlenes Glas beziehungsweise gemahlenes Siliziumdioxid zum Einsatz. Die Faserverstärkung liegt beispielsweise in Form einer Glasfaserverstärkung, einer Kohlenstofffaserverstärkung oder einer Aremidfaserverstärkung vor. Die zweite Schicht beziehungsweise das Polyamid kann jedoch auch verstärkungsfrei ausgestaltet sein.

Die dritte Schicht besteht beispielsweise wiederum aus einem Polyamid, insbesondere einem aliphatischen Polyamid, oder aus Ethylen-Vinylalkohol-Copolymer (auch als EVOH oder EVAL bezeichnet). Das Polyamid ist beispielsweise wiederum PA6, PA66, PA612, PA6/66, PA616 oder PPA. Unter dem Ethylen-Vinylalkohol-Copolymer ist ein Copolymer zu verstehen, das formal aus den Monomeren Ethylen und Vinylalkohol aufgebaut ist. Das Ethylen-Vinylalkohol-Copolymer ist ein preiswerter Sperrschichtwerkstoff mit guter Sperrwirkung gegenüber flüchtigen organischen Verbindungen. Das aliphatische Polyamid weist ein Monomer auf, das sich von aliphatischen Grundkörpern ableitet, beispielsweise aus einem Lactam, insbesondere einem Epsilon-Caprolactam, oder aus Hexamethylendiamin und Adipinsäure.

Es kann vorgesehen sein, dass der Grundkörper ausschließlich aus den drei genannten Schichten besteht, sodass die erste Schicht als Innenschicht und die dritte Schicht als Außenschicht vorliegt. In diesem Fall dient also die erste Schicht der Führung eines Fluids in der Fluidleitung, wobei die hervorragende Beständigkeit des Fluorpolymers genutzt wird. Die beschriebene Fluidleitung, bestehend aus den drei Schichten, weist hervorragende Festigkeitseigenschaften, sowie eine hohe Beständigkeit auf. Es kann jedoch auch vorgesehen sein, zusätzlich zu den bereits genannten drei Schichten wenigstens eine weitere Schicht der Fluidleitung zuzuschlagen. Bevorzugt stellt jedoch die erste Schicht stets die Innenschicht dar. An die erste Schicht schließen sich stets die zweite Schicht und die dritte Schicht an, wobei die zweite Schicht unmittelbar an die erste Schicht und die dritte Schicht unmittelbar an die zweite Schicht angrenzt.

Besonders bevorzugt weist der Grundkörper eine der folgenden Konfigurationen auf, wobei die Materialien ausgehend von der ersten Schicht in radialer Richtung nach außen angegeben sind: ETFE, PA6x, EVOH, PA12x; oder ETFE, PA6x, PA12x; oder ETFE, PPA, PA6x, EVOH, PA12x; oder ETFE, PA6x, PPA, PA12x, EVOH.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Schnittdarstellung durch eine Fluidleitung,
- Figur 2: eine schematische Querschnittdarstellung der Fluidleitung,
- Figur 3: eine schematische Darstellung einer ersten Ausführungsvariante einer Wärmeleitschicht der Fluidleitung,
- Figur 4: eine schematische Schnittdarstellung durch die Wärmeleitschicht, sowie
- Figur 5: eine schematische Darstellung einer zweiten Ausführungsvariante der Wärmeleitschicht.

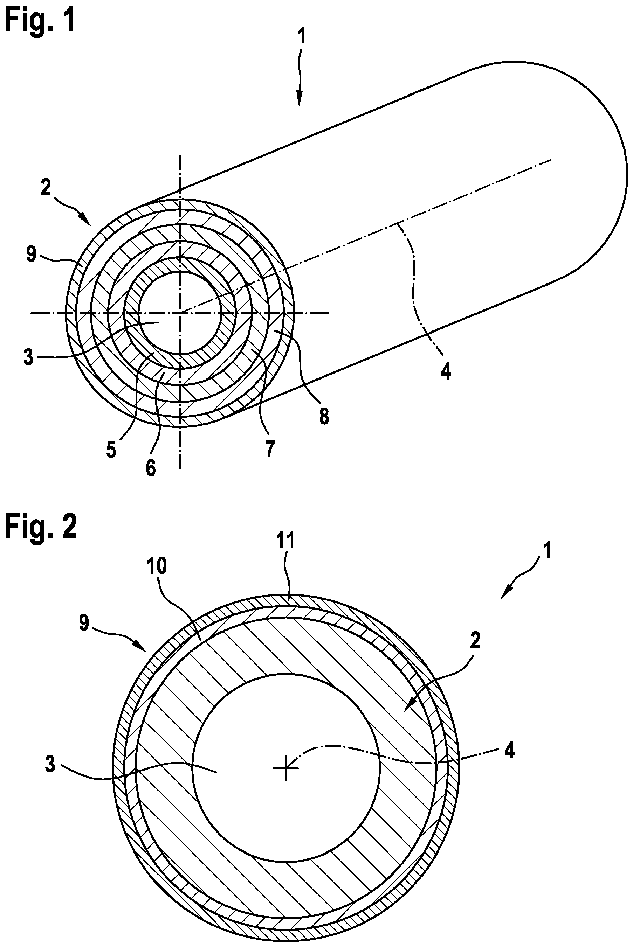

Die Figur 1 zeigt eine schematische Darstellung einer Fluidleitung 1 mit einem Grundkörper 2. Der Grundkörper 2 umgreift zur Ausbildung eines Fluidströmungsraums 3 der Fluidleitung 1 eine Längsmittelachse 4 der Fluidleitung 1 in Umfangsrichtung vollständig. Im Querschnitt gesehen besteht der Grundkörper 2 in dem hier dargestellten Ausführungsbeispiel aus einer ersten Schicht 5, einer zweiten Schicht 6, einer dritten Schicht 7 sowie einer vierten Schicht 8. Auf den Grundkörper 2 ist eine Wärmeschutzschicht 9 aufgebracht. Jede der Schichten 5, 6, 7 und 8 ist in Umfangsrichtung durchgehend ausgebildet und weist bevorzugt in Umfangsrichtung eine konstante Wandstärke auf. Dies kann zudem ebenfalls für die Wärmeschutzschicht 9 gelten.

In dem hier dargestellten Ausführungsbeispiel besteht die erste Schicht 5 aus einem Fluorpolymer, die zweite Schicht 6 aus einem Polyamid, die dritte Schicht 7 aus einem Ethylen-Vinylalkohol-Copolymer und die vierte Schicht 8 wiederum aus einem Polyamid. Grundsätzlich können die Wandstärken der hier dargestellten Schichten 5, 6, 7 und 8 identisch sein. Bevorzugt nehmen die Wandstärken der Schichten 5, 6, 7 und 8 in radialer Richtung nach außen ausgehend von der ersten Schicht 5 zumindest für einige der aufeinanderfolgenden Schichten zu. Die Wärmeschutzschicht 9 besteht in dem hier dargestellten Ausführungsbeispiel ebenfalls aus mehreren Schichten, nämlich einer Wärmeisolationsschicht 10 und einer Wärmeleitschicht 11, welche hier jedoch nicht im Einzelnen gezeigt sind.

Die Figur 2 zeigt eine Querschnittsdarstellung der Fluidleitung 1 in einer Schnittebene, die auf der Längsmittelachse 4 senkrecht steht. Die Schichten 5, 6, 7 und 8 des Grundkörpers 2 sind nicht im Einzelnen dargestellt. Erkennbar sind hingegen nun die Wärmeisolationsschicht 10 und die Wärmeleitschicht 11, wobei die Wärmeisolationsschicht 10 zwischen dem Grundkörper 2 und der Wärmeleitschicht 11 angeordnet ist. Die Wärmeleitschicht 11 bildet insoweit beispielsweise eine Außenschicht der Fluidleitung, also eine äußerste Schicht der Fluidleitung 1. Es kann jedoch auch vorgesehen sein, dass auf die Wärmeschutzschicht 9 eine weitere Schicht folgt, beispielsweise eine Scheuerschutzschicht.

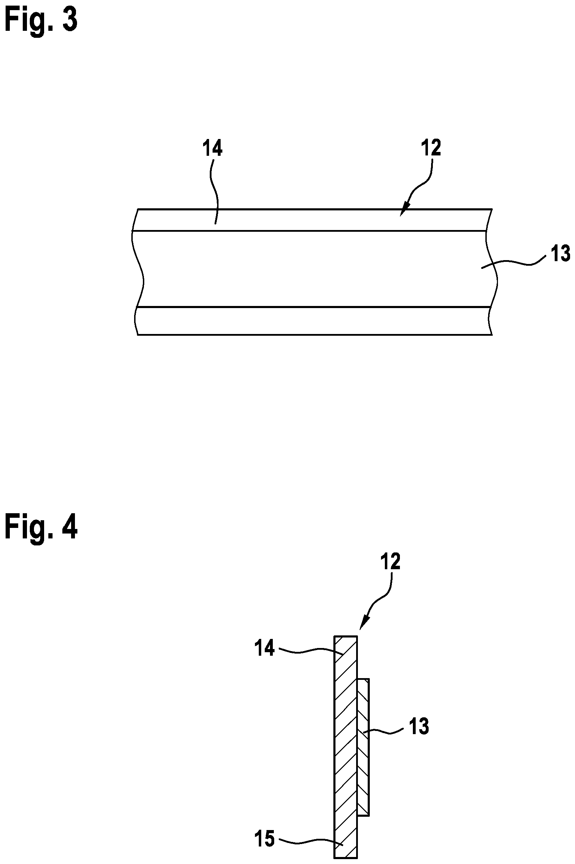

Die Figur 3 zeigt eine schematische Darstellung einer Kunststofffolienbahn 12 sowie einer auf diese aufgebrachte Metallschicht 13 für eine erste Ausführungsvariante der Fluidleitung 1. Aus der Anordnung von Kunststofffolienbahn 12 und Metallschicht 13 wird die Wärmeleitschicht 11 ausgebildet, indem die Kunststofffolienbahn 12 gemeinsam mit der Metallschicht 13 zum Umwickeln des Grundkörpers 2 verwendet wird. In anderen Worten werden die Kunststofffolienbahn 12 und die Metallschicht 13 gemeinsam um den Grundkörper 2 herumgewickelt, nämlich bevorzugt schraubenförmig beziehungsweise helixförmig. Es ist erkennbar, dass die Metallschicht 13 eine geringere Breite aufweist als die Kunststofffolienbahn 12. Entsprechend liegen beidseitig der Metallschicht 13 metallschichtfreie Randzonen 14 und 15 der Kunststofffolienbahn 12 vor. Bevorzugt werden die Kunststofffolienbahn 12 und die Metallschicht 13 derart an dem Grundkörper 2 angeordnet, dass die Metallschicht 13 zwischen der Kunststofffolienbahn 12 und dem Grundkörper 2 angeordnet ist. In anderen Worten liegt die Kunststofffolienbahn 12 auf der dem Grundkörper 2 abgewandten Seite der Metallschicht 13 vor.

Die Figur 4 zeigt eine schematische Schnittdarstellung durch die Kunststofffolienbahn 12 und die Metallschicht 13. Es ist erkennbar, dass die Schichtstärken der Kunststofffolienbahn 12 und die Metallschicht 13 verschieden sind. In dem hier dargestellten Ausführungsbeispiel ist die Schichtstärke der Metallschicht 13 kleiner als die Schichtstärke der Kunststofffolienbahn 12. Es kann jedoch auch vorgesehen sein, dass die Schichtstärken identisch sind oder die Schichtstärke der Metallschicht 13 größer ist als die Schichtstärke der Kunststofffolienbahn 12.

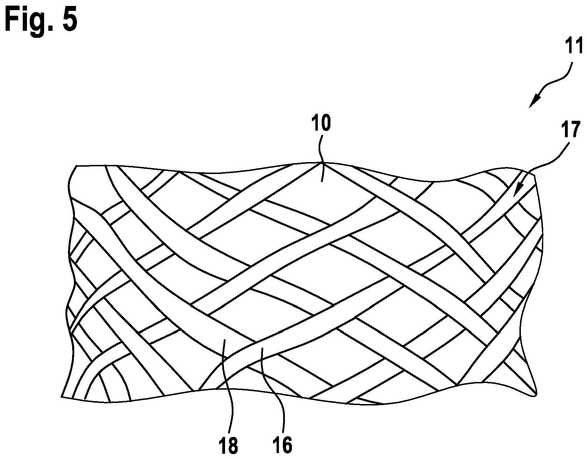

Die Figur 5 zeigt eine schematische Darstellung einer zweiten Ausführungsvariante der Wärmeleitschicht 11. Gemäß dieser ist auf dem Grundkörper 2 die Wärmeisolationsschicht 10 aufgebracht und zudem mit einem Metalldraht 16 umwickelt. Der Metalldraht 16 ist Bestandteil eines Metallgeflechts 17, das zusätzlich zu dem Metalldraht 16 wenigstens einen weiteren Metalldraht 18 aufweist. Die Metalldrähte 16 und 18 verlaufen gegeneinander angewinkelt und gegensinnig schraubenförmig um den Grundkörper 2. Das Metallgeflecht 17 ist in die Wärmeisolationsschicht 10 eingebettet. Hierzu wird die Wärmeisolationsschicht 10 vor dem Aufbringen des Metallgeflechts 17 auf eine Temperatur gebracht, bei welcher sie durch das Aufbringen des Metallgeflechts 17 elastisch verformbar ist. Der Metalldraht 16 beziehungsweise die Metalldrähte 16 und 18 werden vor dem Umwickeln des Grundkörpers 2 mit einer Beschichtung versehen, insbesondere einer Beschichtung aus Kunststoff. Hierdurch wird zum einen das Verarbeiten des Metallgeflechts 17 vereinfacht und zum anderen eine Schichthaftung zwischen dem Metallgeflecht 17 und der Wärmeisolationsschicht 10 verbessert.

In jeder der beschriebenen Ausführungsvarianten weist die Fluidleitung 1 eine hervorragende Flammbeständigkeit auf. Diese wird erzielt, indem mithilfe der Wärmeisolationsschicht 10 und der Wärmeleitschicht 11 eine Wärmeleitung in radialer Richtung bezüglich der Längsmittelachse 4 verschlechtert und in axialer Richtung sowie in Umfangsrichtung verbessert wird. Wärme, die der Fluidleitung 1 zugeführt wird, wird insoweit in Umfangsrichtung und in axialer Richtung rasch verteilt. Ein Übergang in Richtung des Grundkörpers 2 beziehungsweise auf den Grundkörper 2 wird hingegen zumindest zeitweise verhindert oder wenigstens aufgrund der durch die Verteilung der Wärme lokal verkleinerten Temperaturdifferenz zwischen der Wärmeleitschicht 11 und dem Grundkörper 2 verringert.

## Patentansprüche

1. Verfahren zum Herstellen einer Fluidleitung (1) für ein Fluid, die einen Grundkörper (2) mit wenigstens einer aus Kunststoff bestehenden Schicht (5,6,7,8) aufweist, **dadurch gekennzeichnet, dass** auf den Grundkörper (2) wenigstens eine als Wärmeschutzschicht (9) ausgebildete Mantelschicht aufgebracht wird, die über wenigstens eine Wärmeisolationsschicht (10) sowie zumindest eine metallische Wärmeleitschicht (11) verfügt, wobei die Wärmeleitschicht (11) eine den Grundkörper (2) umwickelnde Kunststofffolienbahn (12) und eine auf die Kunststofffolienbahn (12) vor dem Umwickeln des Grundkörpers (2) aufgebrachte Metallschicht (13) aufweist, oder wobei die Wärmeleitschicht (11) wenigstens einen den Grundkörper (2) umwickelnden Metalldraht (16) aufweist, der vor dem Umwickeln des Grundkörpers (2) mit einer Beschichtung versehen wird.

2. Verfahren nach Anspruch 1, **dadurch gekennzeichnet, dass** die Wärmeisolationsschicht (10) auf der dem Grundkörper (2) zugewandten Seite der Wärmeleitschicht (11) angeordnet wird.

3. Verfahren nach einem der vorhergehenden Ansprüche, **dadurch gekennzeichnet, dass** die Wärmeleitschicht (11) und/oder der Metalldraht (16) den Grundkörper (2) schraubenförmig mehrfach umgreifend angeordnet werden/wird.

4. Verfahren nach einem der vorhergehenden Ansprüche, **dadurch gekennzeichnet, dass** die Wärmeleitschicht (11) derart angeordnet wird, dass die Metallschicht (13) im Querschnitt gesehen zwischen der Kunststofffolienbahn (12) und dem Grundkörper (2) vorliegt.

5. Verfahren nach einem der vorhergehenden Ansprüche, **dadurch gekennzeichnet, dass** die Metallschicht (13) mit einer im Vergleich mit der Kunststofffolienbahn (12) geringeren Breite ausgebildet wird, sodass die Kunststofffolienbahn (12) einseitig oder beidseitig der Metallschicht (13) eine metallschichtfreie Randzone (14,15) aufweist.

6. Verfahren nach einem der vorhergehenden Ansprüche, **dadurch gekennzeichnet, dass** die Wärmeleitschicht (11) derart angeordnet wird, dass die Randzone (14,15) oder eine der Randzone (14,15) einen anderen Bereich der Wärmeleitschicht (11) zumindest bereichsweise überlappen.

7. Verfahren nach einem der vorhergehenden Ansprüche, **dadurch gekennzeichnet, dass** die Wärmeleitschicht (11) nach ihrem Anordnen derart wärmebehandelt wird, dass die Randzone (14,15) oder eine der Randzonen (14,15) zumindest bereichsweise mit dem anderen Bereich der Wärmeleitschicht (11) verschmilzt.

8. Verfahren nach einem der vorhergehenden Ansprüche, **dadurch gekennzeichnet, dass** die Wärmeleitschicht (11) derart angeordnet wird, dass eine erste Seite der Metallschicht (13) an eine der ersten Seite gegenüberliegende zweite Seite der Metallschicht (13) überlappungsfrei angrenzt oder diese überlappt.

9. Verfahren nach einem der vorhergehenden Ansprüche, **dadurch gekennzeichnet, dass** der Metalldraht (16) in den Grundkörper (2) oder die Wärmeisolationsschicht (10) bei einer Temperatur eingebettet wird, die größer ist als eine jeweilige Glasübergangstemperatur und/oder Erstarrungstemperatur.

10. Verfahren nach einem der vorhergehenden Ansprüche, **dadurch gekennzeichnet, dass** als Beschichtung für den Metalldraht (16) ein Kunststoff- und/oder ein Haftvermittler verwendet wird.

11. Verfahren nach einem der vorhergehenden Ansprüche, **dadurch gekennzeichnet, dass** der Metalldraht (16) in die Beschichtung eingebettet wird, und/oder dass die Beschichtung durch Plasmabeschichten aufgebracht wird.

12. Verfahren nach einem der vorhergehenden Ansprüche, **dadurch gekennzeichnet, dass** der Metalldraht (16) Bestandteil eines Metallgeflechts (17) ist, welches mit offenen Maschen ausgebildet wird.

13. Verfahren nach einem der vorhergehenden Ansprüche, **dadurch gekennzeichnet, dass** die Wärmeschutzschicht (19) zusätzlich zu der Wärmeisolationsschicht (10) wenigstens eine weitere Wärmeisolationsschicht aufweist, die auf der der Wärmeisolationsschicht (10) abgewandten Seite der Wärmeleitschicht (11) ausgebildet wird, und/oder dass die Wärmeschutzschicht (9) zusätzlich zu der Wärmeleitschicht (11) wenigstens eine weitere Wärmeleitschicht aufweist, die auf der der Wärmeleitschicht (11) abgewandten Seite der Wärmeisolationsschicht (10) oder der weiteren Wärmeisolationsschicht ausgebildet wird.

14. Verfahren nach einem der vorhergehenden Ansprüche, **dadurch gekennzeichnet, dass** für die weitere Wärmeisolationsschicht eine Schmelztemperatur gewählt wird, die von einer Schmelztemperatur der Wärmeisolationsschicht (10) verschieden ist.

15. Fluidleitung (1) für ein Fluid, insbesondere hergestellt gemäß dem Verfahren nach einem oder mehreren der vorhergehenden Ansprüche, aufweisend einen Grundkörper (2) mit wenigstens einer aus Kunststoff bestehenden Schicht (5,6,7,8), **dadurch gekennzeichnet, dass** auf den Grundkörper (2) wenigstens eine als Wärmeschutzschicht (9) ausgebildete Mantelschicht aufgebracht ist, die über wenigstens eine Wärmeisolationsschicht (10) sowie zumindest eine metallische Wärmeleitschicht (11) verfügt, wobei die Wärmeleitschicht (11) eine den Grundkörper (2) umwickelnde Kunststofffolienbahn (12) und eine auf die Kunststofffolienbahn (12) vor dem Umwickeln des Grundkörpers (2) aufgebrachte Metallschicht (13) aufweist, oder wobei die Wärmeleitschicht (11) wenigstens eine den Grundkörper (2) umwickelnden Metalldraht (16) aufweist, der vor dem Umwickeln des Grundkörpers (2) mit einer Beschichtung versehen ist.

## Claims

1. Method for producing a fluid line (1) for a fluid, comprising a base body (2) with at least one layer (5, 6, 7, 8) consisting of plastic, **characterized in that** at least one sheathing layer which is designed as a heat-protection layer (9) is applied to the base body (2), wherein the sheathing layer has at least one heat-insulating layer (10) and at least one metallic heat-conducting layer (11), wherein the heat-conducting layer (11) comprises a plastic foil sheet (12) wrapped around the base body (2) and a metal layer (13) applied to the plastic foil sheet (12) before wrapping around the base body (2), or wherein the heat-conducting layer (11) comprises at least one metal wire (16) wrapped around the base body (2), wherein the at least one metal wire (16) is provided with a coating before wrapping around the base body (2).

2. Method according to claim 1, **characterised in that** the heat-insulating layer (10) is arranged on the side of the heat-conducting layer (11) facing the base body (2).

3. Method according to one of the preceding claims, **characterised in that** the heat-conducting layer (11) and/or the metal wire (16) is/are arranged to helically wrap the base body (2) several times.

4. Method according to one of the preceding claims, **characterised in that** the heat-conducting layer (11) is arranged in such a way that the metal layer (13), seen in cross-section, is provided between the plastic foil sheet (12) and the base body (2).

5. Method according to one of the preceding claims, **characterised in that** the metal layer (13) is formed with a smaller width in comparison with the plastic foil sheet (12), so that the plastic foil sheet (12) comprises a metal layer-free edge zone (14, 15) on one side or both sides of the metal layer (13).

6. Method according to one of the preceding claims, **characterized in that** the heat-conducting layer (11) is arranged in such a way that the edge zone (14, 15) or one of the edge zones (14, 15) overlaps another section of the heat-conducting layer (11) at least in sections.

7. Method according to one of the preceding claims, **characterized in that** the heat-conducting layer (11) is heat-treated after its arrangement in such a way that the edge zone (14, 15) or one of the edge zones (14, 15) melts together with the other section of the heat-conducting layer (11) at least in sections.

8. Method according to one of the preceding claims, **characterized in that** the heat-conducting layer (11) is arranged such that a first side of the metal layer (13) adjoins without overlapping or overlaps a second side of the metal layer (13) opposite to the first side.

9. Method according to one of the preceding claims, **characterized in that** the metal wire (16) is embedded in the base body (2) or the heat-insulating layer (10) at a temperature which is greater than a respective glass transition temperature and/or solidification temperature.

10. Method according to any one of the preceding claims, **characterized in that** a plastic and/or an adhesion promoter is used as a coating for the metal wire (16).

11. Method according to any one of the preceding claims, **characterized in that** the metal wire (16) is embedded in the coating and/or that the coating is applied by plasma deposition.

12. Method according to any one of the preceding claims, **characterised in that** the metal wire (16) is part of a metal mesh (17) formed with open meshes.

13. Method according to any one of the preceding claims, **characterized in that** the heat-protection layer (19) comprises at least one further heat-insulating layer in addition to the heat-insulating layer (10), wherein the further heat-insulating layer is formed on the side of the heat-conducting layer (11) facing away from the heat-insulating layer (10), and/or **in that** the heat-protection layer (9) comprises at least one further heat-conducting layer in addition to the heat-conducting layer (11), wherein the further heat-conducting layer is formed on the side of the heat-insulating layer (10) facing away from the heat-conducting layer (11) or on the further heat-insulating layer.

14. Method according to any one of the preceding claims, **characterised in that** a melting temperature is selected for the further heat-insulating layer which is different from a melting temperature of the heat-insulating layer (10).

15. Fluid line (1) for a fluid, in particular produced according to the method according to one or more of the preceding claims, comprising a base body (2) with at least one layer (5, 6, 7, 8) consisting of plastic, **characterised in that** at least one sheathing layer which is designed as a heat-protection layer (9) is applied to the base body (2), wherein the sheathing layer has at least one heat-insulating layer (10) and at least one metallic heat-conducting layer (11), wherein the heat-conducting layer (11) comprises a plastic foil sheet (12) wrapped around the base body (2) and a metal layer (13) applied to the plastic foil sheet (12) before wrapping around the base body (2), or wherein the heat-conducting layer (11) comprises at least one metal wire (16) wrapped around the base body (2), wherein the at least one metal wire (16) is provided with a coating before wrapping around the base body (2).

## Revendications

1. Procédé de fabrication d'une conduite de fluide (1) pour un fluide, qui présente un corps de base (2) avec au moins une couche constituée de matière plastique (5, 6, 7, 8), **caractérisé en ce que** sur le corps de base (2) est appliquée au moins une couche d'enveloppe réalisée sous forme de couche de protection thermique (9), qui dispose d'au moins une couche d'isolation thermique (10) ainsi que d'au moins une couche métallique thermo conductrice (11), dans lequel la couche thermo conductrice (11) présente une bande de film plastique (12) enveloppant le corps de base (2) et une couche métallique (13) appliquée sur la bande de film plastique (12) avant l'enveloppement du corps de base (2), ou dans lequel la couche thermo conductrice (11) présente au moins un fil métallique (16) enveloppant le corps de base (2), qui est pourvu d'un revêtement avant l'enveloppement du corps de base (2).

2. Procédé selon la revendication 1, **caractérisé en ce que** la couche d'isolation thermique (10) est disposée sur le côté de la couche thermo conductrice (11) qui est tourné vers le corps de base (2).

3. Procédé selon l'une des revendications précédentes, **caractérisé en ce que** la couche thermo conductrice (11) et/ou le fil métallique (16) sont/seront disposés de telle sort à entourer plusieurs fois le corps de base (2) en forme d'hélice.

4. Procédé selon l'une des revendications précédentes, **caractérisé en ce que** la couche thermo conductrice (11) est disposée de telle sorte que la couche métallique (13), vue en coupe transversale, se trouve entre la bande de film plastique (12) et le corps de base (2).

5. Procédé selon l'une des revendications précédentes, **caractérisé en ce que** la couche métallique (13) est réalisée avec une largeur inférieure à celle de la bande de film plastique (12), de sorte que la bande de film plastique (12) présente une zone marginale (14, 15) sans couche métallique d'un côté ou des deux côtés de la couche métallique (13).

6. Procédé selon l'une des revendications précédentes, **caractérisé en ce que** la couche thermo conductrice (11) est disposée de telle sorte que la zone marginale (14, 15) ou l'une des zones marginales (14, 15) chevauche au moins par zones une autre zone de la couche thermo conductrice (11).

7. Procédé selon l'une des revendications précédentes, **caractérisé en ce que** la couche thermo conductrice (11) est traitée thermiquement après sa mise en place de manière à ce que la zone marginale (14, 15) ou l'une des zones marginales (14, 15) fusionne au moins par zones avec l'autre zone de la couche thermo conductrice (11).

8. Procédé selon l'une des revendications précédentes, **caractérisé en ce que** la couche thermo conductrice (11) est disposée de telle sorte qu'un premier côté de la couche métallique (13) est adjacent à un deuxième côté de la couche métallique (13) opposé au premier côté sans se chevaucher ou chevauche celui-ci.

9. Procédé selon l'une des revendications précédentes, **caractérisé en ce que** le fil métallique (16) est noyé dans le corps de base (2) ou la couche d'isolation thermique (10) à une température supérieure à une température de transition vitreuse et/ou une température de solidification respectives.

10. Procédé selon l'une des revendications précédentes, **caractérisé en ce que** le revêtement utilisé pour le fil métallique (16) est un agent plastique et/ou un agent adhésif.

11. Procédé selon l'une des revendications précédentes, **caractérisé en ce que** le fil métallique (16) est noyé dans le revêtement et/ou **en ce que** le revêtement est appliqué par dépôt de plasma.

12. Procédé selon l'une des revendications précédentes, **caractérisé en ce que** le fil métallique (16) fait partie d'une tresse métallique (17) qui est formée avec des mailles ouvertes.

13. Procédé selon l'une des revendications précédentes, **caractérisé en ce que** la couche de protection thermique (19) présente, en plus de la couche d'isolation thermique (10), au moins une autre couche d'isolation thermique qui est formée sur le côté de la couche thermo conductrice (11) opposé à la couche d'isolation thermique (10), et/ou **en ce que** la couche de protection thermique (9) présente, en plus de la couche thermo conductrice (11), au moins une autre couche thermo conductrice qui est formée sur le côté de la couche d'isolation thermique (10) opposé à la couche thermo conductrice (11) ou sur l'autre couche d'isolation thermique.

14. Procédé selon l'une des revendications précédentes, **caractérisé en ce que** pour l'autre couche d'isolation thermique une température de fusion est choisie, qui est différente d'une température de fusion de la couche d'isolation thermique (10).

15. Conduite de fluide (1) pour un fluide, en particulier fabriquée selon le procédé selon une ou plusieurs des revendications précédentes, présentant un corps de base (2) avec au moins une couche constituée de matière plastique (5, 6, 7, 8), **caractérisée en ce qu'**au moins une couche d'enveloppe conçue comme une couche de protection thermique (9) est appliquée sur le corps de base (2), laquelle dispose d'au moins une couche d'isolation thermique (10) ainsi que d'au moins une couche métallique thermo conductrice (11), dans lequel la couche thermo conductrice (11) présente une bande de film plastique (12) enveloppant le corps de base (2) et une couche métallique (13) appliquée sur la bande de film plastique (12) avant l'enveloppement du corps de base (2), ou dans lequel la couche thermo conductrice (11) présente au moins un fil métallique (16) enveloppant le corps de base (2), qui est pourvu d'un revêtement avant l'enveloppement du corps de base (2).
